Europäisches Patentamt

European Patent Office

Office européen des brevets

(11) Veröffentlichungsnummer: **0 332 795**
A1

# (12) EUROPÄISCHE PATENTANMELDUNG

(21) Anmeldenummer: 88810158.1

(22) Anmeldetag: 15.03.88

(51) Int. Cl.4: **B23K 31/04** , **E21B 10/48**

(43) Veröffentlichungstag der Anmeldung:
20.09.89 Patentblatt 89/38

(84) Benannte Vertragsstaaten:
AT BE CH DE ES FR GB GR IT LI LU NL SE

(71) Anmelder: KARDIAM MASCHINENBAU AG
Gubelstrasse 41
CH-8050 Zürich(CH)

(72) Erfinder: Herbstrith, Markus
Rütiweg 17
CH-8610 Uster(CH)
Erfinder: Kälin, Emilian
Schwyzerbrugg
CH-8836 Bennau(CH)

(74) Vertreter: Amsler, Martin et al
FELBER & PARTNER AG Dufourstrasse 116
CH-8008 Zürich(CH)

(54) Verfahren und Vorrichtung zum Bohrkronen-Löten.

(57) Die Bohrkrone (1) ist in einem Spannfutter (27) gehalten. Die Einfräsungen (13) an der Bohrkrone (1) oder bei Bohrkronen ohne Einfräsungen deren Rand wird durch translatorische Bewegungen an die Lötstelle (45) gebracht. Die aufzulötenden Diamantsegmente werden nacheinander aus einem Magazin (31) vereinzelt und vom Greifer (36) an die Lötstelle gebracht. Nach jeder Lötung wird die Bohrkrone (1) abgesenkt, um ein vorprogrammiertes Winkelmass rotiert, in ihrer horizontalen Lage erneut einjustiert, und wieder an die Lötstelle (45) hinaufgefahren. Die Lötung erfolgt durch berührungslose Erhitzung des Lötbereichs mittels eines HF-Induktors und gleichzeitiger Zufuhr von endlosem Lötdraht. Alle Verfahrensschritte werden von einer speicherprogrammierbaren elektronischen Steuereinheit (29) eingeleitet und gesteuert. Das Verfahren kann über das Hängeschaltpult (30) programmiert oder manuell gesteuert werden.

FIG. 3

## VERFAHREN UND VORRICHTUNG ZUM BOHRKRONENLOETEN

Die vorliegende Erfindung betrifft ein Verfahren, mittels dem Diamant-Segmente automatisch auf Stahlrohre auflötbar sind. Solche Stahlrohre mit aufgelöteten Diamantsegmenten dienen als Bohrkronen. Die Diamantsegmente bestehen aus speziellen Legierungen, welche unter anderem Diamantpulver oder Diamantkorn enthalten. Dieser Diamantanteil erzeugt schliesslich die abrasive Wirkung der Bohrkrone, welche vorallem zum Schneiden von Beton, Steinen, Mauerwerk, Asphalt und dergleichen Material verwendet wird. Neben dem Verfahren lehrt die vorliegende Erfindung auch eine Vorrichtung zu dessen Ausübung.

Bisher werden Diamantsegmente zu Bohrzwecken auf Stahlrohren angeordnet, indem sie auf deren Querschnittsfläche aufgelötet werden. Dabei wird von Segment zu Segment ein gewisser Abstand offengelassen, welcher während des Bohrens als Durchgang für die Kühlflüssigkeit dient.

Zum Bohren wird die Bohrkrone mit relativ wenig Auflagedruck gedreht. Die Kühlflüssigkeit wird während des Bohrens längs der Rohrinnenseite zum Segmentkranz der Bohrkrone hin gepumpt, strömt dort zwichen den Diamantsegmenten nach aussen und fördert den pulverförmigen Abrieb von der Bohrkrone längs der Rohraussenseite zurück.

Die Diamantsegmente müssen exakt auf der Querschnittsfläche des Stahlrohres sitzen. Jedes Segment muss bezüglich des Stahlrohres in radialer Richtung genau justiert werden und seine Schneidfläche muss exakt rechtwinklig zur Achsrichtungbeziehungsweise parallel zur Querschnittsfläche des Rohres gerichtet sein. Einerseits um das zu gewährleisten, andrerseits um besser die beim Bohren tangential auf die Segmente wirkenden Kräfte auf das Stahlrohr zur übertragen, wird das Rohr mit speziellen Einfräsungen versehen, in welche die Diamantsegmente genau einpassen.

In jene Einfräsungen werden die Segmente mittels Hartlötung eingelötet. Herkömmlich erfolgt das von Hand durch eine speziell ausgebildete, erfahrene Fachkraft. Jedes Diamant-Segment muss dabei einzeln eingesetzt und mittels Lehren ausgerichtet werden. Hernach wird das justierte Segment und das Stahlrohr im Bereich der Auflage des Segmentes erhitzt, was gewöhnlich mittels eines Gasbrenners erfolgt. Dann wird das Lot zugeführt. Unmittelbar nach dessen Aushärtung muss das einzelne Diamantsegment in seiner Positionierung nachgemessen werden. In der Regel ist ein Nachrichten notwendig, was ein neuerliches Erhitzen erfordert. Sobald das Lot weich zu werden beginnt, kann das Segment feinjustiert werden. Nach der erneuten Aushärtung erfolgt eine abschliessende Kontrollmessung. Erst wenn das Segment mit höchster Genauigkeit sitzt, wird das nächste eingelötet. Die genaue Positionierung der Segmente hat einen sehr entscheidenden Einfluss auf die Lebensdauer der Bohrkrone. Schon geringe Abweichungen von der Idealposition bewirken überdurchschnittliche Beanspruchungen einzelner Segment, wodurch der Segmentkranz der Bohrkrone als ganzes frühzeitig ersetzt werden muss.

Die oben beschriebene Arbeit des Aufsetzens, Ausrichtens und Hartlötens der Diamantsegmente stellt hohe Anforderungen an die Fähigkeiten, die Sorgfalt und Ausdauer der eingesetzten Fachkraft. Zudem ist die Arbeit sehr zeitaufwendig und das Herstellen der Bohrkronen entsprechend teuer.

Neben Bohrkronen werden auch Säge- beziehungsweise Fräsblätter in ähnlicher Weise mit Diamantsegmenten versehen. Für das Auflöten von Segmenten auf jene radförmigen Blätter sind Maschinen verfügbar, welche das exakte Aufsetzen und Hartlöten der Segmente vollautomatisch ausführen. Eine solche Maschine verfügt über eine höhenverstellbare Welle, auf die das zu bearbeitende Sägeblatt aufspannbar ist. Aus einem Magazin werden die Diamantsegmente zugeführt, vereinzelt, von einem Greifer gepackt und auf das Sägeblatt aufgesetzt. Der Lötbereich wird mittels eines HF-Induktors erhitzt. Dann wird eine einstellbare Menge Lot in Form von endlosem Lotband zugeführt. Nach erfolgter Hartlötung gibt der Greifer das Diamantsegment frei, wonach die Welle das Sägeblatt um einen entsprechend des Blattumfanges einstellbaren Winkel dreht. Danach wird das nächste Diamantsegment zugeführt und aufgelötet usw. Obwohl derart arbeitende Maschinen seit Jahren bekannt sind, ist es bisher nicht gelungen, ein Verfahren und insbesondere eine Vorrichtung zu schaffen, welche auch Bohrkronen durch entsprechendes Auflöten der Diamantsegmente automatisch herstellen. Die Probleme, welche sich der Konstruktion einer Maschine, die ein solches Verfahren ausüben könnte, entgegenstellten, waren vorallem die folgenden: Hat man bei Sägeblättern im wesentlichen nur unterschiedliche Durchmesser und Blattstärken, welche von der Maschine entsprechend zu berücksichtigen sind, so muss bei einer Bohrkrone einerseits deren Durchmesser, andrerseits aber auch deren Länge, die beide stark vari ieren können, berücksichtigt werden.

Ausserdem bereitet die Temperaturführung besondere Probleme, da gerade bei Bohrkronen kleineren Durchmessers der ganze Endbereich während des Auflötens der einzelnen Diamantsegmente ständig in seiner Temperatur ansteigt und deshalb die zur Auflötung des nächstfolgenden Segmentes erforderliche Wärmemenge stark beeinflusst wird.

Es ist zusätzlich das Problem zu lösen, eine Referenzposition für die eigentliche Lötung zu finden, welche für verschiedenste Bohrkronen maschinell definierbar ist, sodass sie reproduzierbar von den Bohrkronen unterschiedlicher Dimensionen anfahrbar ist. Zu berücksichtigen ist dabei auch, dass ein zu bearbeitendes Stahlrohr in seinem Durchmesser in der Regel um etwa 1 bis 2% variiert, also nicht exakt rund ist. Zum anderen stellt die Magazinierung und Vereinzelung der speziell für Bohrkronen geformten Diamantsegmente ein hartnäckiges Problem dar, wenn sie universell für Segmente für verschiedene Bohrkronendurchmesser funktionieren soll. Der grosse Bedarf an Bohrkronen drängte die einschlägigen Hersteller von Bohrkronen schon seit Jahren zum Einsatz eines maschinellen Verfahrens. Allein, die Lösung konnte bisher nicht gefunden werden, sodass sämtliche Bohrkronen immer noch mühsam und zeitaufwendig und entsprechend teuer von Hand hergestellt werden müssen.

Es ist deshalb die Aufgabe der vorliegenden Erfindung, die oben geschilderten Probleme zu lösen und ein Verfahren zum Auflöten von Diamantsegmenten auf Bohrkronen zu schaffen, welches vollautomatisch maschinell durchführbar ist. Ferner ist es eine Aufgabe der Erfindung, eine Vorrichtung zur Ausübung des Verfahrens zu schaffen.

Das erfindungsgemässe Verfahren zum automatischen Auflöten von Diamantsegmenten auf Bohrkronen gemäss dem Oberbegriff ist gekennzeichnet durch die Verfahrensschritte a) bis f) des kennzeichnenden Teiles des unabhängigen Patentanspruches 1.
Die erfindungsgemässe Vorrichtung zur Ausübung des Verfahrens nach Anspruch 1 besteht im wesentlichen aus einer elektronischen Steuereinheit, einem mittels Lineareinheiten fahrbaren und drehbaren Spannfutter für die zu bearbeitende Bohrkrone, einer Vereinzelungsvorrichtung für die aufzulötenden Diamantsegmente, einen programmgesteuerten Greifer zum Zubringen und Halten der Diamantsegmente sowie einem programmgesteuerten HF-Generator und zeichnet sich durch die Merkmale gemäss dem unabhängigen Patentanspruch 3 aus.

Anhand der Zeichnungen wird das erfindungsgemässe Verfahren nachfolgend erläutert. Ferner wird eine vorteilhafte Ausführung der erfindungsgemässen Vorrichtung beispielsweise gezeigt und nachfolgend im einzelnen beschrieben.

Es zeigt:

Fig. 1 Eine schematische Darstellung der Bewegung der eingespannten Bohrkrone in ihren Freiheitsgraden;

Fig. 2 Einfräsungen in einer Bohrkrone;

Fig. 3 eine Gesamtansicht der Vorrichtung im Aufriss;

Fig. 4 die Vorrichtung im Grundriss;

Fig. 5 die Vorrichtung im Seitenriss;

Fig. 6 eine vereinfachte schematische Darstellung des Magazins mit Vereinzelungsvorrichtung in Perspektive;

Fig. 7 das Magazin mit Segment-Handhabe-Vorrichtung im Aufriss;

Fig. 8 das Magazin mit Segment-Handhabe-Vorrichtung im Grundriss;

Fig. 9 das Magazin mit Segment-Handhabe-Vorrichtung im Seitenriss.

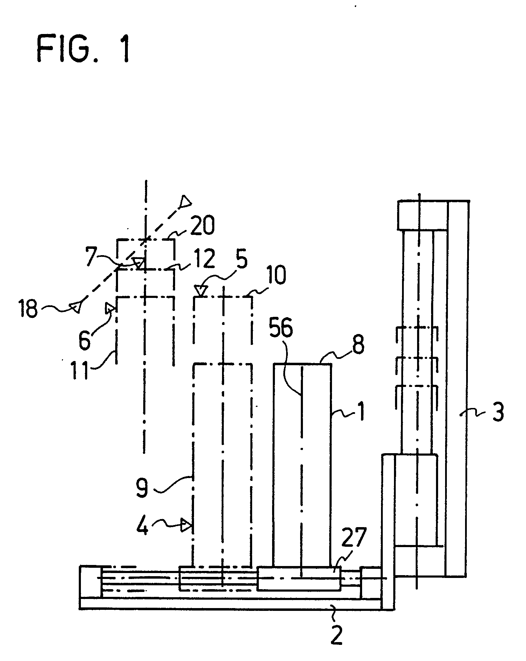

Anhand von Figur 1 wird nun nachfolgend der Ablauf des erfindungsgemässen Verfahrens erklärt. Das Verfahren arbeitet ähnlich dem bisher für Sägeblätter benützten, indem das Löten stets in derselben Position erfolgt. Das bringt den Vorteil mit sich, dass die Mittel zum Erhitzen der zu verlötenden Teile, die Zuführung der Segmente wie auch des Lots immer an dieselbe Stelle erfolgt. Gleiches gilt auch für die Temperaturmessung. Die Diamantsegmente sind in einem Magazin gestapelt, aus dem sie vereinzelt entnommen und mittels eines Greifers zugeführt und in der Lötposition gehalten werden. In der Lötposition wird sowohl das Segment wie auch das Stahlrohr im Bereich der Lötstelle mittels eines Hochfrequenz-Induktors berührungslos erhitzt, indem dessen Polschuhe von einem Schwingkreis unter Einspeisung von einem HF-Generator unter hochfrequente Wechselspannung gesetzt werden. Bis dahin unterscheidet sich das erfindungsgemässe Verfahren im Prinzip kaum von dem herkömmlich für Sägeblätter praktizierten. Die Merkmale des neuen Verfahrens werden nun aber offenkundig ermöglichen doch erst sie das Bearbeiten von Bohrkronen unterschiedlicher Dimensionen. In der Figur 1 ist die zu bearbeitende Bohrkrone mit 1 bezeichnet. Sie ist eingespannt in ein Spannfutter, das auf einer horizontal fahr baren Lineareinheit 2 aufgebaut ist. Jene ihrerseits ist mittels einer vertikal fahrbaren Lineareinheit 3 in der Vertikalen fahrbar. Die Bohrkrone 1 befindet sich hier in der Einspannlage. Das Verfahren läuft nun ab, indem die Bohrkrone 1 in einem ersten Schritt durch mindestens zwei translatorische Bewegungen verschiedener Richtungen, die durch Lichtschranken 4,5,6,7 begrenzt werden, mit ihrem zu bearbeitenden Rand 8 von der Einspannlage in die Ausgangslage 12 gefahren wird. Diese Bewegungen erfolgen mittels der Lineareinheiten 2,3. Im einzelnen fährt die Bohrkrone 1 vorerst in horizontaler Richtung in einem Eilgang bis zur Lichtschranke 4. Sobald jene durchfahren wird, stoppt die horizontale Bewegung und die Bohrkrone befindet sich in der strickpunktiert eingezeichneten Lage 9. Aus dieser Lage 9 wird die Bohrkrone mittels der vertikalen Lineareinheit 3 hochgefahren, bis wiederum die Lichtschranke 5 durchbrochen wird, was in der Lage 10 geschieht. Die nächste Bewegung erfolgt wiederum in horizontaler Richtung, aber jetzt mit einer bedeutend langsameren Geschwindigkeit, nämlich in einem Kriechgang der horizontalen Lineareinheit 2. Derart langsam bewegt lässt sich die Bohrkrone 1 an exakter Position, nämlich in der Lage 11 durch die Lichtschranke 6 stoppen. Hernach wird sie gleichermassen in einem Kriechgang von der vertikalen Lineareinheit 3 hochgefahren und durch die Lichtschranke 7 in einer als Ausgangslage bezeichneten Lage 12 gestoppt. Damit ist der Verfahrensschritt a) beendet.

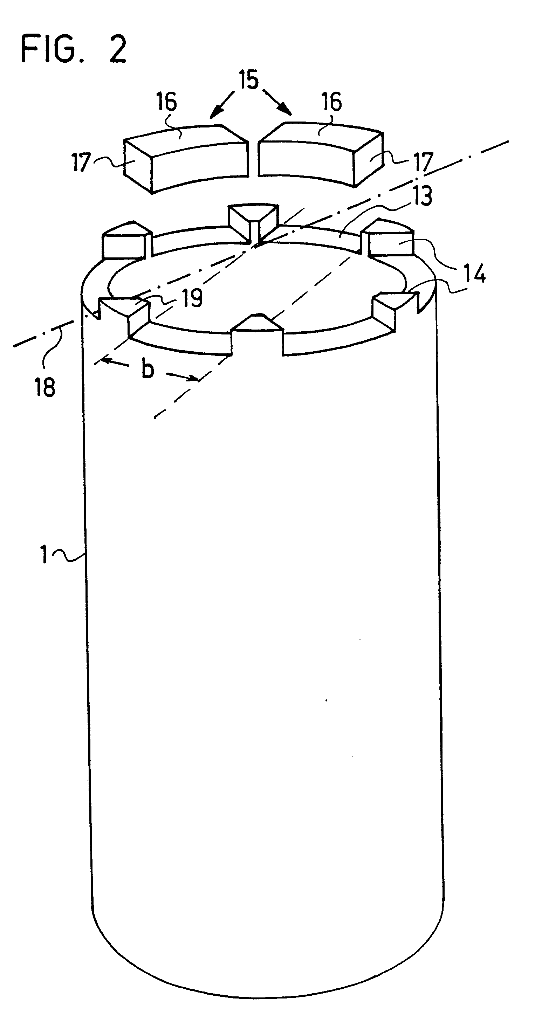

Der Verfahrensschritt b) unterscheidet sich, je nachdem, ob die Bohrkrone in ihrem Randbereich Einfräsungen aufweist oder nicht. Betrachten wir vorerst den üblicheren Fall, bei dem Einfräsungen vorhanden sind. Diese Einfräsungen können zum Beispiel aussehen wie in Figur 2 dargestellt. Die Einfräsungen 13 erfolgten hier überall, indem mit einem Fräser bestimmter Fräsbreite b diagonal durch die Bohrkrone 1 gefahren wurde, und zwar in verschiedenen Richtungen. Die dadurch entstandenen Einfräsungen 13 weisen jeweils parallel zueinander stehende Seitenflächen 14 auf. Die Diamantsegmente 15 müssen nun in jene Einfräsungen 13 eingesetzt und darin hartverlötet werden. Die entsprechenden Diamantsegmente 15 zeigen daher eine vierkant-ringsegmentförmige Gestalt. Sie weisen flache Längsseiten 16 und parallel zueinander stehende Stirnseiten 17 auf.

Wenn es sich bei der Bohrkrone um eine solche mit Einfräsungen handelt, wird sie im Verfahrensschritt b) mittels eines Elektromotors mit Impulsgeber um ihre Längsachse rotiert, bis eine schief zur Längsachse ge richtete Lichtschranke 18 das Ende einer Einfräsung feststellt, wie in Figur 1 dargestellt.

Die Figur 2 zeigt die genaue Lage der Lichtschranke 18. Diese "schneidet" den Randbereich der Bohrkrone 1, indem sie jeweils eine Einfräsung 13 durchquert. Sobald durch die Drehung der Bohrkrone 1 der Nocken 19 in die Lichtschranke 18 hineinläuft, wird die Drehung gestoppt. Damit ist für diesen Fall der Verfahrensschritt b) abgeschlossen. Sind keine Einfräsungen an der Bohrkrone vorhanden, so wird sie im Schritt b) gemäss einer vorher entsprechend ihrem Umfang festgelegten, Unterteilung programmgesteuert in die nächstfolgende Drehlage rotiert.

Im nächsten Verfahrensschritt c) wird die Bohrkrone 1 erst erneut in horizontaler Richtung mittels der horizontalen Lineareinheit 2 und der Lichtschranke 6 feinjustiert. Das ist deshalb notwendig, weil der Durchmesser der Bohrkronen, obwohl es sich bei ihnen um Hochpräzisions-Stahlrohre handelt, gleichwohl ein wenig variiert. In der Regel beträgt die Variation ungefähr 1 bis 2% des entsprechenden Durchmessers. Nach erfolgter Feinjustierung der horizontalen Lage der Bohrkrone 1 wird diese mittels der vertikalen Lineareinheit 3 (Figur 1) langsam hochgefahren, bis sie in der Lötlage 20 nach einer vorprgrammierten Fahrzeit oder einem vorprogrammierten Fahrweg gestoppt wird. Dann wird vom Greifer ein vereinzeltes Diamantsegment zugeführt und exakt in eine Einfräsung eingefügt.

Bei Bohrkronen ohne Einfräsungen wird es genau auf ihren Rand aufgesetzt. Die horizontale Feinjustierung der Bohrkrone sorgt dafür, dass jedes Diamantsegment in Raidalrichtung der Bohrkrone exakt zentriert über der Wanddicke der Bohrkrone zu liegen kommt. Durch den Greifer wird ausserdem gewährleistet, dass die Längs- und Mantelflächen des Diamantsegmentes exakt rechtwinklig beziehungsweise parallel zur Mantelfläche der Bohrkrone ausgerichtet sind, sodass nun unmittelbar die Hartlötung erfolgen kann. Hierzu wird programmgesteuert mittels eines Hochfrequenz-Induktors, welcher von einem HF-Generator gespeist wird, das Diamantsegment und sein Auflagebereich an der Bohrkrone erhitzt. Die beiden Polschuhe des Induktors sind in fixer Lage so angeordnet, dass sie in der Lötlage der Bohrkrone aussen und innen am Dimantsegment zu liegen kommen. Sie berühren jedoch das Diamantsegment nicht. Die Erhitzung geschieht deshalb berührungslos durch hochfrequente Wechselströme. Ein Pyroskop, welches in geringem Abstand montiert auf die Lötstelle hin gerichtet ist, misst die Wäremstrahlung und ermittelt daraus die Temperatur an der Lötstelle. Sobald die Solltemperatur erreicht ist, wird über eine Zuführvorrichtung Lot in Form von endlosem Draht ab einer Rolle zugeführt. Das geschmolzene Lot gelangt durch die Wirkung der Kapillarität sofort überall zwischen das Diamantsegment und seine Berührungsflächen mit der Bohrkrone. Sofort nach erfolgter Lotzuführung wird der Lotdraht wieder zurückgezogen und der HF-Induktor ausgeschaltet.

Als nächstes folgt nun der Verfahrensschritt d), indem die Bohrkrone mit dem eben aufgelöteten Diamantsegment in die Ausgangslage 12 zurückgefahren wird, was mittels der vertikalen Lineareinheit 3 erfolgt. Damit ist ein erster Regelkreis des Verfahrens geschlossen, folgt doch jetzt wiederum der Verfahrensschritt b), in welchem die Bohrkrone wie oben bereits beschrieben um ihre Längsachse rotiert wird. Das Mass der Rotation wird bei Bohrkronen mit Einfräsungen wiederum mittels der Lichtschranke 18 bestimmt, welche die Rotation sofort stoppt, sobald sie das Ende der nächsten Einfräsung feststellt, wenn sie also das nächste Mal von einer offenen Stellung aus geschlossen wird. Nach erfolgter Absenkung der Bohrkrone in die Ausgangsposition 12 ist ja vorerst die Lichtschranke 18 geschlossen, da ja an die Stelle, wo sie auftrifft, ein Diamantsegment getreten ist. Wenn sie jetzt rotiert wird, erfolgt ihre Oeffnung, sobald die nächste Einfräsung in die Lichtschranke 18 gedreht wird. Deren Ende stellt die Lichtschranke fest, weil sie der an die Einfräsung angrenzende Nocken 19 schliesst.

Anders verhält es sich, wenn die Bohrkrone keine Einfräsungen aufweist. Dann wird sie einfach um ein entsprechend ihrem Umfang festgelegtes Winkelmass gedreht. In der Folge werden jetzt unter dem Verfahrensschritt e), die Schritte b) bis d) wiederholt, bis im Fall der Bohrkrone mit Einfräsungen unter b) keine weiteren Einfräsungen mehr registriert werden. Bei der Bohrkrone ohne Einfräsungen wird der Regelkreis b) bis d) abgeschlossen, sobald die Bohrkrone um volle 360° gedreht wieder in ihre ursprüngliche Drehlage bei der ersten Lötung zurückgekehrt ist.

Mit dem Verfahrensschritt f) schliesslich wird die fertig bearbeitete Bohrkrone 1 schliesslich in umgekehrter Richtung des Verfahrensschrittes a) in die Einspannlage zurückgefahren.

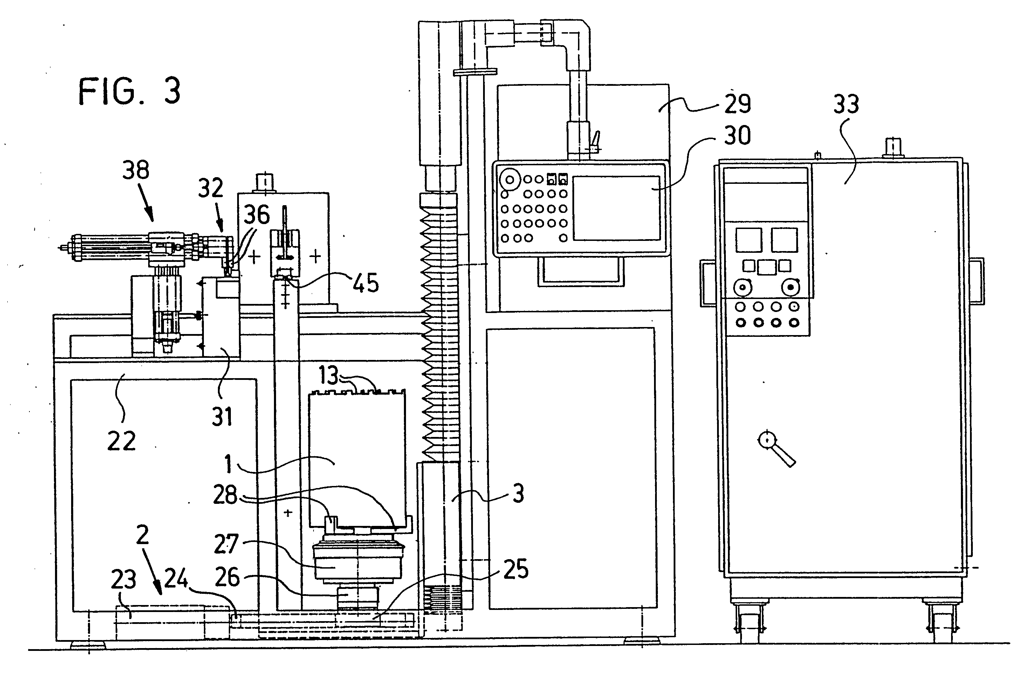

In Figur 3 wird die erfindungsgemässe Vorrichtung zur Ausübung des Verfahrens in einer Gesamtansicht im Aufriss dargestellt. Die Vorrichtung weist einen Rahmen 22 auf, in welchen die einzelnen Bestandteile und Organe eingebaut sind. Unten ist die horizontale Lineareinheit 2 zu erkennen. Diese umfasst einen Antriebsmotor 23 und eine von ihm getriebene Spindel 24. Ein Schlitten 25 ist auf Kegelbüchsen mit Wellen gelagert und wird mittels einer Spindel angetrieben. Der Schlitten 25 dient als Support für den Rundtisch 26, welcher das Spannfutter 27 trägt. Jenes verfügt über drei Klemmbacken 28, welche mittels einer pneumatischen Kolben-Zylinder-Einheit betätigbar sind. Die einzelnen Klemmbacken 28 sind derart mechanisch miteinander gekoppelt, dass ihre zum Rundtisch radialen Bewegungen exakt synchron erfolgen. Dadurch wird gewährleistet, dass die Rotationsachse einer Bohrkrone beliebigen Durchmessers, üblicherweise etwa zwischen 40mm und 350mm, exakt mit jener des um seine Hochachse drehenden Rundtisches 26 zusammenfällt. Der Rundtisch 26 ist von einem hier nicht einsehbaren Elektromotor mit Impulsgeber über ein Schneckengetriebe angetrieben. Die horizontale Lineareinheit 2 mit dem von ihr getragenen Rundtisch 26 mit Spannfutter 27 ist über einen Support mit der vertikalen Lineareinheit 3 verbunden. Jene ist im Prinzip gleich aufgebaut wie die horizontale. Das Spannfutter 27 hat nebst der Funktion des pneumatischen Oeffnens und Schliessens somit drei Freiheitgrade der Bewegung. Es lässt sich translatorisch in horizontaler und in vertikaler Richtung fahren und ausserdem um seine Rotationsachse drehen. Alle diese Bewegungsfunktionen sind motorisch beziehungsweise pneumatisch betätigbar. Die Bewegungen werden zudem elektronisch von einer speicherprogrammierbaren Steuereinheit 29 gesteuert und überwacht.

An einem Hänge-Schaltpult 30 kann die speicherprogrammierbare elektronische Steuereinheit handbedient oder programmiert werden. Der ganze Verfahrensablauf kann von dieser Steuereinheit 29 vollautomatisch gesteuert werden, wenn die Randbedingungen (Einfräsung ja/nein,) Winkelmass etc. eingegeben sind und die Vorrichtung konditioniert ist. Hierzu muss Lotdraht in der Lotzuführvorrichtung vorhanden sein. Weiter müssen Diamantsegmente im Magazin 31 vorhanden sein und der Hochfrequenz-Generator 33 muss betriebsbereit sein.

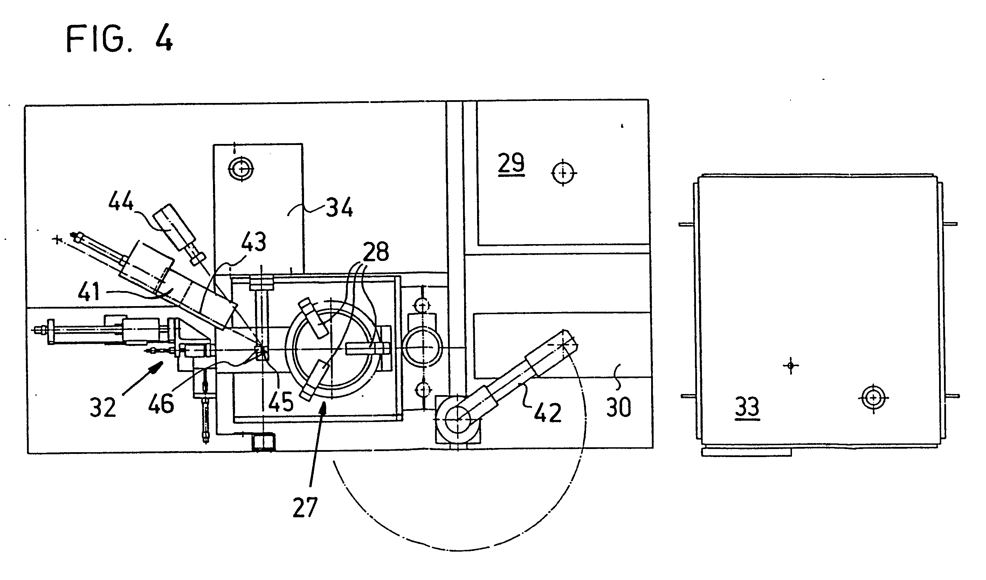

In Figur 4 ist die Vorrichtung gemäss Figur 1 in einer Ansicht von oben, also im Grundriss gezeigt. Deutlich erkennbar ist der Rundtisch 26 mit den drei Klemmbacken 28 des Spannfutters 27. Das Hänge-Schaltpult 30 ist am Schwenkarm 42 schwenkbar aufgehängt. Mit 32 ist die Vereinzelungsvorrichtung zum hier nicht einsehbaren Magazin bezeichnet. Die Lotzuführ-Vorrichtung 41 fördert den Lotdraht ab einer Rolle von der Steuereinheit 29 programmgemäss vorwärts und rückwärts. Die strichpunktierte Linie 43 deutet die Lage des Lotdrahtes in dessen Zuführvorrichtung 41 an. Das Pyroskop 44 ist auf die Lötstelle 45 hin gerichtet. Es ist ein handelsübliches Instrument, welches aufgrund der gemessenen Wärmestrahlung die Temperatur am Ort der Lötstelle 45 registrieren kann. Mit 46 sind die beiden fix angeordneten Polschuhe des HF-Induktors bezeichnet.

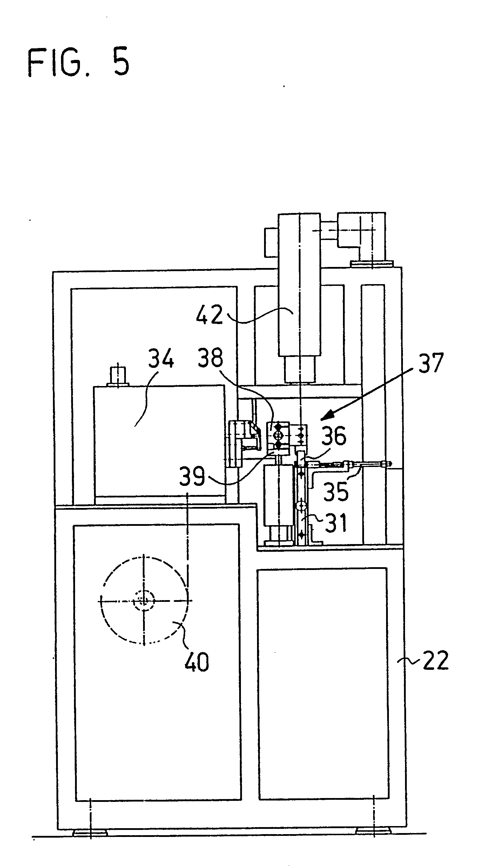

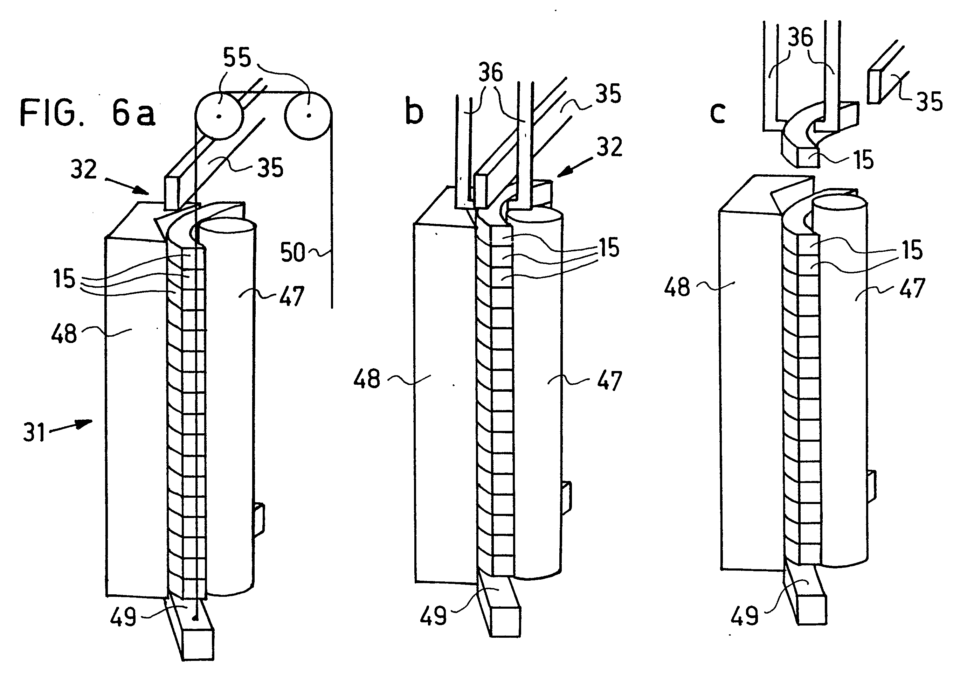

Die Figur 5 zeigt die Vorrichtung nach Figur 3 von der linken Seite her gesehen in einem Seitenriss. Das Magazin 31 enthält die Diamantsegmente 15 mit ihren flachen Längsseiten aufeinandergestapelt. Der Schieber 35 dient zur Vereinzelung, wie das später anhand der Figur 6 genauer erläutert wird. Vom Greifer 36 ist hier nur ein Greiferarm 36 von der Seite zu sehen. Die beiden Greiferarme 36 werden von der Greiferbetätigungs-Vorrichtung 37 geöffnet und geschlossen.

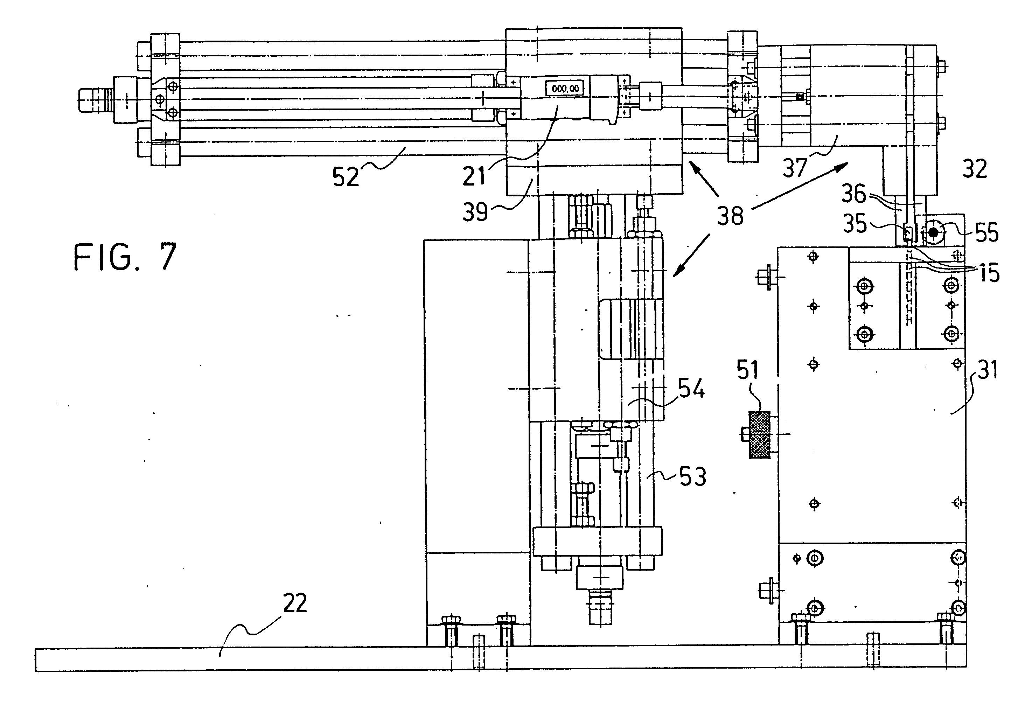

Jene Vorrichtung 37 bildet einen Bestandteil der Segmenthandhabevorrichtung 38 wie sie als Ganzes in Figur 7 gezeigt ist. Im Inneren des Rahmens 22 ist die Lotdrahtrolle 40 angeordnet, ab welcher mittels einer speziellen, von der Steuereinheit 29 gesteuerten Zuführvorrichtung 41 der Lotdraht zur Lötstelle gebracht und von dort wieder zurückgezogen wird. Die strichpunktierte Linie 42 deutet die Lage der Rotationsachse einer Bohrkrone in Lötlage an.

Die Figur 6 zeigt nun vereinfacht mittels schematischen, perspektivischen Zeichnungen den Aufbau des Magazins 31 und die Funktionsweise der Vereinzelungsvorrichtung 32. Die Diamantsegmente 15 sind mit ihren flachen Längsseiten aufeinandergestapelt. Jedes hat die Form eines Segmentes aus einem Vierkantring, wobei die Segmentschnittflächen als Stirnseiten der Diamantsegmente 15 parallel zueinander stehen. Das Magazin 31 weist hier einfachheitshalber nicht eingezeichnete Wände auf, längs denen die Segmente 15 mit ihren Stirnseiten geführt sind. Auf der Innenseite der Segmente 15 ist im Magazin eine gehärtete, geschliffene Vollwelle 47 angeordnet, an welche die Diamantsegmente 15 längs je einer Mantellinie anstehen. Diese Vollwelle 47 bildet eine exakte Referenzlinie für Diamantsegmente beliebiger Krümmungsradien. Der Abstand zwischen den beiden Stirnseiten der zu verwendenden Segmente 15 muss bei diesem Magazin stets identisch sein.

Auf ihrer Aussenseite drückt eine Klemmschlagleiste 48 kraft von Druckfedern ständig an die Diamantsegmente 15. Diese werden dadurch von der Leiste 48 an die Vollwelle 47 angedrückt. Die Klemmleiste 48 hat eine im Querschnitt V-förmige Anpressfläche. Deswegen wird jedes Segment auf seiner äusseren gekrümmten Fläche längs zwei am Segment symmetrisch zueinander verlaufenden Mantellinien berührt. Durch eben diese Formwahl der Klemmleiste 48 ist das Magazin 31 ebenfalls universal, das heisst für Segmente 15 beliebiger Krümmungsradien verwendbar. Der Magazinboden 49 ist so gestaltet und dimensioniert, dass er zwischen die Klemmleiste 48 und die Vollwelle 47 passt und so zwischen jenen hochbewegt werden kann. Das Hochbewegen geschieht hier mittels eines Drahtseilzuges 50.

Dieser ist motorisch betrieben und der Antriebsmotor wird ebenfalls von der Steuereinheit 29 angesteuert. Beim Hochziehen des Magazinbodens 49 wird die von der Klemmleiste 48 erzeugte Reibkraft an den Diamantsegmenten 15 überwunden und der ganze Stapel von Segmenten 15 wird hochgeschoben, bis das oberste Segment 15 am Schieber 35 anschlägt, wie das in Figur 6a) gezeigt ist. Zur Vereinzelung fährt nun der Greifer 36 mit seinen zwei Greiferarmen 36 in geöffnetem Zustand unter Umgreifung des Schiebers 35 herunter, bis die Griffflächen der Greiferarme 36 gegenüber der oberen Hälfte des obersten Segmentes zu liegen kommen. In dieser Position schliessen die Greiferarme 36 und packen das dazwischenliegende Segment 15. Diese Situation zeigt Figur 6 b). Nun wird der Drahtseilzug 50 entlastet. Die Segmente 15 sind dann nur noch durch die Klemmkraft zwischen Klemmleiste 48 und Vollwelle 47 gehalten. Sodann wird der Schieber 35 zurückgezogen, sodass er nicht mehr über dem obersten Segment 46 liegt. Damit zeigt sich die Situation wie in Figur 6 c) dargestellt. Der Greifer 36 fährt nun mit dem von ihm gepackten Segment 46 hoch und bringt es an die Lötstelle 45. Dieses Wegfahren verändert die Lage des nächstfolgenden Segmentes nicht, da dieses immer noch zwischen Klemmleiste 48 und Vollwelle 47 eingeklemmt ist. Nun wird der Schieber 35 wieder vorgeschoben, worauf der Magazinboden 49 durch Hochziehen den Stapel von Segmenten 15 hochschiebt, bis wiederum das oberste Segment 15 am Schieber 35 anschlägt. Damit ist wieder die Situation gemäss Figur 6a) erreicht und der Vereinzelungs-Zyklus beginnt von neuem, bis das Magazin 31 entleert ist. Sobald nämlich der Magazinboden 49 eine vorherbestimmte Höhe erreicht hat, veranlasst die Steuereinheit den Stopp der ganzen Lötvorrichtung und zeigt den Mangel an Segmenten am Schaltpult an.

In Figur 7 ist die ganze Segment-Handhabevorrichtung 38, bestehend aus dem Magazin 31 mit Vereinzelungsvorrichtung 32, der Greiferbetätigungsvorrichtung 37 und den Mitteln zur Greiferbewegung im Aufriss aus Figur 3 herausgenommen in vergrössertem Massstab dargestellt. Die beiden Greifer arme 36 haben eben unter Umgreifung des Schiebers 35 ein Diamantsegment 15 gepackt. Das Diamantsegment 15 ragt jedoch nur mit seiner oberen Hälfte aus dem Magazin 31 und wird entsprechend auch nur an seiner oberen Hälfte von den Greiferarmen 36 gepackt. Das Oeffnen und Schliessen des Greifers 36 erfolgt ausschliesslich durch eine horizontale Bewegung des linken Greiferarmes 36. Jener muss jeweils genügend weit zurückfahren, damit er beim Herunterfahren des Greifers 36 den Schieber 35 nicht touchiert. Der rechte Greiferarm 36 fährt in der gezeigten horizontalen Stellung am Schieber 35 vorbei. Seine Grifffläche liegt exakt in der gleichen Ebene wie die Mantellinie an der Vollwelle 47, welche mit den Diamantsegmenten die Berührungslinie bildet. Durch diese feste Einstellung des rechten Greiferarmes 36 für das Ergreifen des Diamantsegmentes 15 wird sichergestellt, dass jenes beim eigentlichen Ergreifen in seiner Lage nicht verändert wird. Dem gleichen Zweck dient auch die Tatsache, dass die Greiferarme 36 so schmal ausgebildet sind, dass sie das Diamantsegment 15 trotz dessen Krümmung in einem nur ganz schmalen Bereich längs von exakt gegenüberliegenden Mantellinien berühren. Vom Magazin 31 ist hier nur das Gehäuse sichtbar. Mittels der Rändelschraube 51 lässt sich der Anpressdruck der Klemmleiste durch Verkürzung der Federwege der anpressenden Druckfedern einstellen. Die Greiferbetätigungs-Vorrichtung 37 arbeitet pneumatisch mit mindestens einer pneumatischen Kolben-Zylindereinheit. Jene ist ein Bestandteil der Segmenthandhabe-Vorrichtung, die hier gesamthaft mit 38 bezeichnet ist. Sie weist eine horizontale Greifer-Lineareinheit 39 auf, mittels welcher die Greiferbetätigungsvorrichtung 37 in horizontaler Richtung verschiebbar ist. Diese Greifer-Lineareinheit 39 besteht hier ebenfalls aus einer pneumatischen Zylinder-Kolbeneinheit, deren horizontal bewegbare Schieber 52 endseitig die Greiferbetätigungs-Vorrichtung 37 trägt. Die horizontale Greifer-Lineareinheit 39 ist überdies mit einer Einstelleinrichtung 21 ausgerichtet, mittels welcher ein Nullwert festlegbar ist, bis zu welchem der Horizontalschieber 52 nach rechts ausgefahren wird, wenn die Lineareinheit 39 betätigt wird. Diese horizontale Greifer-Lineareinheit 39 ihrerseits ist auf den Vertikalschieber 53 der zugehörigen pneumatisch betriebenen vertikalen Greifer-Lineareinheit 54 aufgebaut, welche fest auf dem Rahmen 22 montiert ist. Mittels dieser ganzen Segmenthandhabe-Vorrichtung 38 lassen sich die Segmente deshalb einzeln ergreifen und durch vertikale und horizontale Verschiebungenn an die Lötstelle 45 zubringen. Das Vereinzeln und Zubringen der Diamantsegmente erfolgt nun, indem nach dem Ergreifen des obersten Diamantsegmentes 15 der im Magazin 31 gelagerte Stapel erst einmal entlastet wird.

Nun wird der Schieber 35 zurückgefahren (aus der Blattebene heraus) und gibt den Raum über dem gepackten Diamantsegment 15 frei. Als nächstes wird der Vertikalschieber 53 hochgefahren, bis sich das Segment 15 über dem Niveau der Bohrkrone befindet. Hernach fährt der Horizontalschieber 52 das Segment 15 kraft der horizontalen Greifer-Lineareinheit 39 nach rechts exakt über die Lötstelle 45, und dort bringt es der Vertikalschieber 53 kraft der vertikalen Greifer-Lineareinheit 54 genau an die Lötstelle. Unterdessen wird der Schieber 35 wieder vorgefahren und der mittlerweile nurmehr von der Klemmkraft der Klemmleiste gehaltene Stapel durch Hochstossen verschoben, bis wieder das oberste Diamantsegment 15 am Schieber 35 anschlägt. Dies erfolgt durch Hochziehen des Magazinbodens mittels des Drahtseilzuges 50.

Nach erfolgter Lötung öffnet der Greifer, fährt dann erst vertikal hoch, dann in horizontaler und dann in vertikaler Richtung zurück, umgreift dabei den Schieber 35 und packt dann das nächste Diamantsegment.

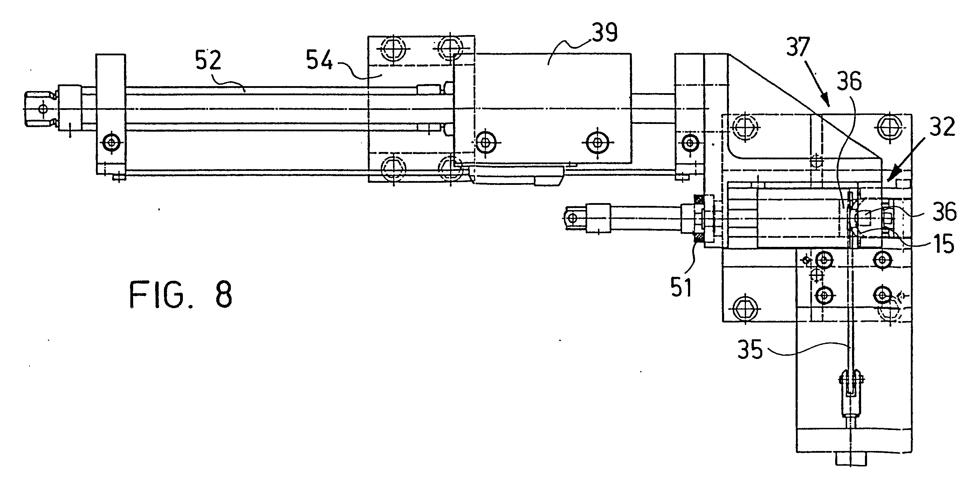

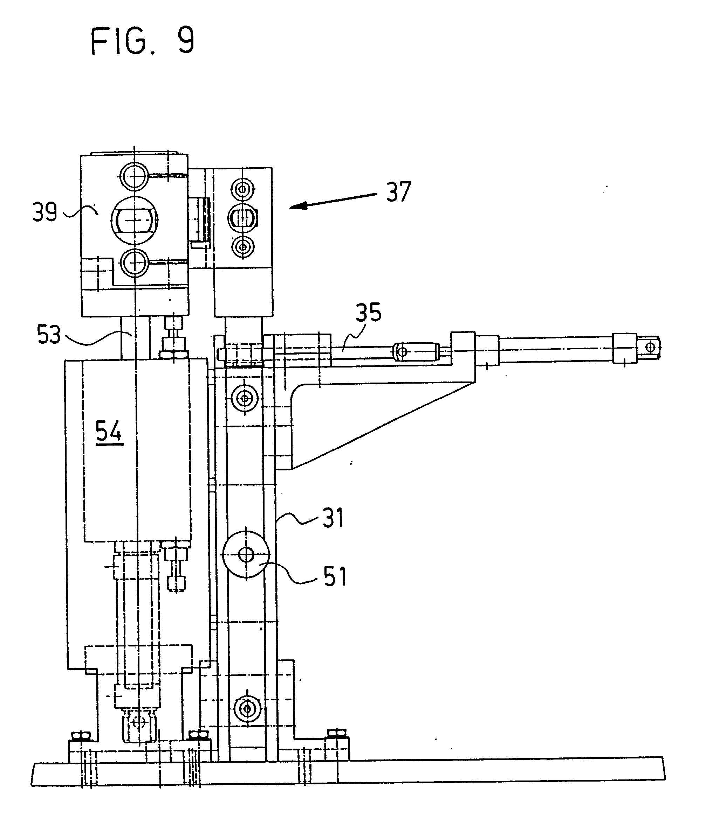

Die Figur 8 zeigt die oben eben beschriebene Vereinzelungsvorrichtung 32 sowie die Mittel zum Betätigen und Verschieben des Greifers 36 im Grundriss. Schliesslich zeigt die Figur 9 auch noch eine Ansicht im Seitenriss, also entsprechend der Figur 3 von links gesehen.

Alle Bewegungen der gesamten Vorrichtung, angefangen von den Klemmbacken 28 des Spannfutters 27, den Bewegungen des Spannfutters 27 wie auch des Greifers 36, des Schiebers 35, des Magazinbodens 49 und des Lotdrahtes, werden von der speicherprogrammierbaren Steuereinheit 29 elektronisch gesteuert. Einzelne Bewegungen können auch manuell am Schaltpult eingegeben werden. Die Umsetzung der Betätigungen in elektronische Steuerbefehle übernimmt jedoch auch die Steuereinheit 29. Ferner übernimmt diese Steuereinheit 29 auch das Ein- und Ausschalten des HF-Induktors. Die Einschaltzeiten werden dabei von den Messwerten aus dem Pyroskop 44 abhängig gemacht. Gerade bei Bohrkronen kleineren Durchmessers werden die benachbarten Lötstellen im Verlaufe des Auflötens der einzelnen Segmente unvermeidlich zunehmend erhitzt. Die Einschaltzeit des HF-Induktors muss deshalb immer kürzer werden, was sichergestellt wird, indem entsprechend der vom Pyroskop gemessenen Temperatur der HF-Induktor ausgeschaltet wird.

Das erfindungsgemässe Verfahren und die Vorrichtung zu dessen Ausübung ermöglichen erstmals ein vollautomatisches Auflöten von Diamantsegmenten auf eine Bohrkrone. Durch die erfindungsgemässen Merkmale des Verfahrens konnte eine Vorrichtung geschaffen werden, die universal für Bohrkronen unterschiedlicher Dimensionen einsetzbar ist. Neben Bohrkronen verschiedener Länge können auch solche verschiedener Durchmesser bearbeitet werden, da auch das schwierige Problem der Magazinierung, Vereinzelung und Zuführung von entsprechend geformten Diamantsegmenten unterschiedlicher Krümmungsradien gelöst wurde.

## Ansprüche

1.) Verfahren zum automatischen Auflöten von Diamantsegmenten (15) auf Bohrkronen (1), bei dem das Löten stets in derselben Position (45) erfolgt und bei dem die Diamantsegmente (15) von einem Greifer (36) vereinzelt zugeführt und in der Lötposition (45) gehalten werden, wobei unter Erhitzung der Lötstelle (45) Lot zugeführt wird, dadurch gekennzeichnet, dass

a) die Bohrkrone (1) durch mindestens zwei translatorische Bewegungen verschiedener Richtungen, die durch Lichtschranken (4,5,6,7) begrenzt werden, mit ihrem zu bearbeitenden Rand (8) von der Einspannlage in eine Ausgangslage (12) gefahren wird,

b) die Bohrkrone (1) um ihre Längsachse rotiert wird, bis eine schief zur Längsachse gerichtete Lichtschranke (18) das Ende einer Einfräsung (13) feststellt, oder, dass die Bohrkrone (1) um ihre Längsachse rotiert wird, bis sie programmgesteuert eine entsprechend einer vorgegebenen Unterteilung ihres Umfanges nächstfolgende Drehlage eingenommen hat,

c) dass die Bohrkrone (1) in dieser Drehlage in horizontaler Richtung feinjustiert wird und dann in die Lötlage (20) gefahren wird, wonach ein vom Greifer (36) aus einem Magazin (31) vereinzelt zugeführtes Diamantsegment (15) auf die Bohrkrone (1) aufgesetzt und mit ihr verlötet wird,

d) dass die Bohrkrone (1) in die Ausgangslage (12) zurückgefahren wird,

e) dass das Verfahren mit Schritt b) bis d) weiterläuft, bis die schiefe Lichtschranke (18) keine Einfräsung (13) mehr registriert oder die Bohrkrone (1) programmgemäss um 360 Grad gedreht wurde, und

f) dass die Bohrkrone (1) in die Einspannlage zurückgefahren wird.

2.) Verfahren nach Anspruch 1, dadurch gekennzeichnet, dass das vom Greifer (36) zugeführte Diamantsegment (15) vorgängig vereinzelt wird, indem im Verfahrensschritt c)

a) die ringsegmentförmigen Diamantsegmente (15) mit ihren flachen Längsseiten aufeinander in einem Magazin (31) gestapelt unter Verschiebung des Magazinbodens (49) in Stapelrichtung verschoben werden, bis das oberste Diamantsegment (15) an einem quer zur Stapelrichtung über dem Stapel beweglichen Schieber (35) anschlägt, und sich der Stapel unter einer Vorspannung befindet.

b) der Greifer (36) in geöffnetem Zustand den Schieber (35) umgreift und das oberste Diamantsegment (15) packt,

c) der Stapel entlastet wird, sodass er sich nicht mehr unter einer Vorspannung befindet, wonach die Diamantsegmente (15) im Stapel ausschliesslich durch eine unter Federkraft stehende Klemmleiste (48) in ihrer Lage gehalten werden,

d) der Schieber (35) vom Stapel zurückfährt,

e) der Greifer (36) mit dem gepackten Diamantsegment (15) ausfährt und es an die Lötstelle (45) bringt,

f) der Schieber (35) wieder vor den Stapel fährt, und

g) erneut a) bis f), bis das Magazin (31) entleert ist.

3.) Vorrichtung zur Ausübung des Verfahrens nach Anspruch 1, im wesentlichen bestehend aus einer elektronischen Steuereinheit (29), einem Spannfutter (27) für die zu bearbeitende Bohrkrone (1), einer Vereinzelungsvorrichtung (32) für die aufzulötenden Diamantsegmente (15), einem programmgesteuerten Greifer (36) zum Zubringen und Halten der Diamantsegmente (15) sowie einem programmgesteuerten HF-Generator (33) mit Schwingkreis (34) und HF-Induktor mit Polschuhen (46), dadurch gekennzeichnet, dass das Spannfutter (27) mindestens drei Freiheitsgrade, nämlich zwei translatorische und einen rotativen aufweist, wobei Antriebsmittel (2,3) vorhanden sind, mittels denen das Spannfutter (27) programmgesteuert in den drei Freiheitsgraden fahrbar ist, und dass das Magazin (31) eine Vereinzelungsvorrichtung (32) aufweist, in welchem Magazin (31) die ringsegmentförmigen Diamantsegmente (15) mit ihren flachen Längseiten aufeinander stapelbar sind, wobei sie je mit ihren beiden Stirnseiten längs von zwei einander gegenüberliegenden Magazin- Innenwänden geführt sind und Mittel (47,48) vorhanden sind, mittels denen die eine ihrer gekrümmten Flächen längs einer Mantellinie, die andere längs zwei Mantellinien mit Klemmdruck beaufschlagbar sind, dass der Magazinboden (49) innerhalb des Magazins (31) in Stapelrichtung programmgesteuert bewegbar ist, ferner dass mindestens ein beweglicher Schieber (35) programmgesteuert als Anschlag vor das Stapelende schiebbar und wieder zurückziehbar ist.

4.) Vorrichtung nach Anspruch 3, dadurch gekennzeichnet, dass die Antriebsmittel (2,3) für die Bewegung des Spannfutters (27) in seinen Freiheitsgraden durch eine horizontale und eine vertikale, mechanisch getriebene Lineareinheit (2,3), sowie durch einen Rundtisch (26), der mittels eines Elektromotors mit Impulsgeber drehbar ist, gegeben sind, dass die Lineareinheiten (2,3) in einem Eilgang das Spannfutter (27) von der Einspannlage in horizontaler und vertikaler Richtung nacheinander an eine erste Lichtschranke (4,5) und dann in einem Kriechgang in die Ausgangslage (12) fahrbar ist, welche durch weitere Lichtschranken (6,7) bestimmt ist, und in der eine schief zur Achse der Bohrkrone (1) angeordnete Lichtschranke (18) den Randbereich der Bohrkrone (1) um etwa die Tiefe einer Einfräsung (13) schneidet, ferner dass eine Einrichtung (21) vorhanden ist, mittels welcher die vertikale Bewegung der Bohrkrone (1) in der Lötlage (20) stoppbar ist.

5.) Vorrichtung nach Anspruch 3, dadurch gekennzeichnet, dass, eine im Magazin (31) fest montierte, gehärtete und geschliffene Vollwelle (47), welche in der Mitte an jedem Diamantsegment (15) des Stapels längs der Mantellinie deren inneren, gewölbten Flächen anliegt, als Referenzbasis für alle im Magazin (31) befindlichen Diamantsegmente (15) dient, ferner dass die an den äusseren gewölbten Flächen der Diamantsegmente (15) anliegende Klemmleiste (48) in symmetrischer Weise längs von zwei verschiedenen Mantellinien an jene anliegt und kraft Druckfedern an die Diamantsegmente (15) angedrückt wird.

6.) Vorrichtung nach Anspruch 3, dadurch gekennzeichnet, dass die auf der äusseren, gewölbten Seite der Diamantsegmente (15) anliegende Klemmleiste (48) zwei zueinander geneigte Klemmflächen aufweist.

7.) Vorrichtung nach Anspruch 3, dadurch gekennzeichnet, dass der Magazinboden (49) im Inneren des Magazins (31) verschiebbar ist, indem er mittels mindestens eines motorisch betriebenen Drahtseilzuges (50) programmgesteuert in Stapelrichtung ziehbar ist.

Kardiam AG, CH-8

# FIG. 1

Kardiam AG, CH-ε

# FIG. 2

FIG. 3

Kardian AG, CH-8050 Zürich

EP 0 332 795 A1

Kardiam AG, CH-8050 Zürich

FIG. 4

Kardiam AG, CH-8050

# FIG. 5

Kardiam AG, CH-8050 Zürich

FIG. 6a

FIG. 7

Kardian AG, CH-8050 Zürich

EP 0 332 795 A1

Kardiam AG, CH-8050

FIG. 8

EP 0 332 795 A1

Kardiam AG, CH-8050

# FIG. 9

Europäisches
Patentamt

**EUROPÄISCHER RECHERCHENBERICHT**

Nummer der Anmeldung

EP 88 81 0158

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 208 154 (GUNDY)<br>* Spalte 1, Zeilen 21-46; Spalte 4, Zeilen 31-58 * | 1,3 | B 23 K 31/04<br>E 21 B 10/48 |
| A | FR-A-2 243 049 (SOCIETE ECA)<br>* Seite 1, Zeilen 10-27; Seite 4, Zeile 33 - Seite 6, Zeile 19 * | 1,3 | |
| A | EP-A-0 088 401 (KÄHNY MASCHINENBAU GmbH)<br>* Ansprüche * | 1,3 | |
| A | GB-A- 958 384 (TIMKEN ROLLER BEARING CO.)<br>* Seite 2, Zeile 112 - Seite 3, Zeile 23 * | 1,3 | |
| A | US-A-3 343 308 (FESSEL)<br>* Spalte 4, Zeile 67 - Spalte 5, Zeile 9 * | 1,3 | |

RECHERCHIERTE SACHGEBIETE (Int. Cl.4)

B 23 K
E 21 B
B 24 D
B 28 D
B 23 D

Der vorliegende Recherchenbericht wurde für alle Patentansprüche erstellt

| Recherchenort | Abschlußdatum der Recherche | Prüfer |
|---|---|---|
| DEN HAAG | 27-10-1988 | ALTING V. GEUSAU |